# EUROPÄISCHE PATENTSCHRIFT

(11) **EP 0 649 018 B1**
(45) Veröffentlichungstag und Bekanntmachung des Hinweises auf die Patenterteilung: **27.09.2000**
(21) Anmeldenummer: 94118269.3
(22) Anmeldetag: 30.01.1992
(51) Int. Cl.: G01N 27/406

(54) **Vorrichtung zum kontinuierlichen Überwachen der Konzentrationen von gasförmigen Bestandteilen in Gasgemischen**
Apparatus for continuously monitoring the concentration of gaseous components in gaseous mixtures
Appareil pour la surveillance continue de la concentration de composants gazeux dans des mélanges de gaz

(30) Priorität: 30.01.1991 DE 4102741; 22.03.1991 DE 4109516
(43) Veröffentlichungstag der Anmeldung: 19.04.1995
(62) Teilanmeldung aus: 92902959.3
(73) Patentinhaber: Heraeus Electro-Nite International N.V., 3530 Houthalen (BE)
(72) Erfinder: Häfele, Edelbert, D-76228 Karlsruhe (DE); Schönauer, Ulrich, D-67131 Karlsruhe (DE)
(74) Vertreter: Kühn, Hans-Christian

(56) Entgegenhaltungen:
- EP-A- 0 057 393
- US-A- 4 283 261
- US-A- 4 639 305
- US-A- 4 902 400

## Beschreibung

Die Erfindung betrifft eine Vorrichtung gemäß dem Oberbegriff des Hauptanspruches.

Eine solche Vorrichtung ist bekannt (US-4,283,261). Dieses Dokument offenbart eine Vorrichtung zur kontinuierlichen Überwachung der Konzentration von zumindest einem gasförmigen Bestandteil in Gasgemischen mit einem, zumindest zwei elektrochemische Halbzellen mit einem Sauerstoffionen-leitenden Festelektrolyten, mit einer nicht-ionenleitenden Keramikschicht auf dem Festelektrolyten, auf die vorzugsweise metall- und/oder metalloxidhaltige mit den gasförmigen Bestandteilen wechselwirkenden Elektrode mittels Siebdruck als dünne Schicht aufgebracht sind, wobei ein von der Konzentration des Bestandteils abhängiges elektrisches Meßsignal erzeugt wird, mit einer Heizung und mit elektrischen Leitungen zum Anschluß und zum Angriff für die elektrischen Meßsignale, wobei auf einer Seite der Vorrichtung zumindest zwei Elektroden als voneinander beabstandet angeordnete dünne Schichten aufgebracht sind, auf der gleichen Seite ferner ein von den Elektroden beabstandeter Temperaturfühler aufgebracht ist und auf der anderen Seite der Vorrichtung eine elektrische Widerstandsheizschicht als Heizung vorgesehen ist.

Es handelt sich hierbei um eine Lambda-Sondenanordnung, dessen Festelektrolyt selbsttragend ausgebildet ist. Ein irgendwie gearteter Hinweis auf die Aufbringung des Festelektrolyten durch eine Dickschichttechnik ist nicht gegeben. Zwar wird auch die Temperatur gemessen, wobei aber ein separates Thermoelement vorgesehen ist. Dieses ist ebenfalls nicht in Siebdrucktechnik aufgebracht. Schließlich und endlich erfolgt keine Messung an mehr als einer Gaskomponente.

Die EP-0 057 393 beschreibt auch eine Einrichtung zur Messung des Sauerstoffpartialdruckes. Somit offenbart diese bekannte Sensorvorrichtung nicht die Messung an mehr als einer Gaskomponente in einem Gasgemisch. In Abkehr von der Erfindung besteht der Träger aus einem Keramik-Heizdraht-Laminat und einem Schichtaufbau.

Schließlich beschreibt die DE-36 10 363 eine Sonde, die zwar verschiedene Gaskomponenten erfassen können. Nicht hingegen kann der Partialdruck von Sauerstoff gehessen werden. Ferner ist im Unterschied zu der Erfindung keine Dickschichtbauweise (Siebdruck) vorgesehen. Außerdem benötigt die bekannte Ausführung ein Referenzgas und ist überdies mit keiner Temperaturmeßeinrichtung ausgestattet.

Nachteilig ist auch deren komplizierter Aufbau der Sonde der DE-36 10 363. So muß bei der Herstellung dieser Vorrichtungen als Sonde Gasdichtigkeit erzielt werden und nach Herstellung eine Gasdichtigkeitsprüfung durchgeführt werden, wodurch die Gestehungskosten für die Sonde teuer werden. Hinzu kommt, daß in dem Sondenrohr noch eine separate Heizung vorgesehen werden muß; infolgedessen läßt sich keine kompakte Bauweise erzielen und ein schlechter Wärmeübergang zwischen der Heizung und dem Sondenrohr mit allen daraus resultierenden Nachteilen wie hoher Energiebedfarf und inhomogenes Temperaturverteilung ist zu erwarten. Hierdurch bedingt, ergibt sich auch ein relativ großer Einbauraum. Ferner ist aufgrund der großen Masse und die für deren Erwärmung benötigte Zeit von mindestens 60 s beim Einschalten nicht sofort Betriebsbereitschaft gegeben. Außerdem muß relativ viel Energie zum Heizen während des gesamten Betriebes aufgewendet werden. Ein wesentlicher Nachteil ist, abgesehen von der Trägheit dieses bekannten Systems die infolge der Temperaturabhängigkeit des Meßsignals der Sensoren nur mäßige Genauigkeit. Schließlich muß der bekannten Vorrichtung Luft als Referenzgasgemisch zugeführt werden, wodurch nicht nur das Gehäuse komplexer gestaltet werden muß, sondern auch der Einbauort nicht frei gewählt werden kann.

Es ist zwar schon daran gedacht worden, die Temperaturabhängigkeit der bekannten Vorrichtungen dadurch zu kompensieren, daß man einen Temperatursensor in die bekannte Vorrichtung miteinbaut, um die Temperaturabhängigkeit auf rechnerischem Wege zu kompensieren. Eine solche Vorrichtung ist jedoch noch nicht bekannt geworden.

Der Erfindung liegt die Aufgabe zugrunde, eine Vorrichtung gemäß dem Oberbegriff des Hauptanspruchs mit einfacherem und zugleich für die Messung mehrerer gasförmiger Bestandteile eines Gasgemisches geeigneter Aufbau, platzsparendem und ortsmäßig wahlfreiem Einbau mit besseren Ansprech- und Zeitverhalten und genaueren Meßergebnissen unter Einsatz von weniger Heizleistung vorzuschlagen.

Diese Aufgabe wird bei einer Vorrichtung gemäß dem Oberbegriff des Hauptanspruchs erfindungsgemäß durch dessen kennzeichnende Merkmale gelöst.

Hierbei wird als Träger ein Plättchen vorgesehen, auf dessen einer Seite die Elektroden und auf dessen anderer Seite eine,vorzugsweise mäanderförmig ausgebildete Widerstandsheizschicht aufgebracht ist, die das dünne Plättchen in wenigen Sekunden auf Betriebstemperatur aufheizt, so daß es betriebsbereit ist. Erforderlichenfalls kann eine elektrisch isolierende Oxidschicht zwischen der Widerstandsheizschicht und dem Plättchen bei elektrischen Spannungen, größer als die Zersetzungsspannungen des Festelektrolyten (ca. 2V bei ZrO₂) sind, verwendet werden. Aufgrund der geringen Masse und Abmessungen des Trägerplättchens wird für den laufenden Betrieb nur vergleichsweise wenig Heizleistung benötigt. Wird auf der einen Seite noch ein Temperaturfühler aufgebracht, der die gemittelte, effektive Temperatur in unmittelbarer Nähe der Elektroden mißt, so kann ein Höchstmaß an Meßgenauigkeit erzielt werden. Der Temperaturfühler kann mäanderförmig in der Mitte des Plättchens angeordnet sein. Durch die Verwendung des Plättchens wird ferner ein deutlich kleineres Einbaumaß erzielt, ohne daß ein kompliziertes und teures Gehäuse erforderlich wäre. Bedingt durch die kleinen Abmessungen sowie der nicht notwendigen Referenzelektrode, die beim Stand der Technik einem Referenzgas (z.B. Luft) ausgesetzt sein muß, kann auch die erfindungsgemäße Vorrichtung ansonst nur schwer zugänglichen Stellen, beispielsweise im Abgasstrang von Kraftfahrzeugen angebracht werden. Aufgrund der nur als Schichten auf gebrachten Komponenten ist auch eine einfache Herstellung mittels Schichttechnologien möglich. Eine Dichtigkeitsprüfung entfällt. Auch kann mit der erfindungsgemäßen Vorrichtung die Konzentration von Sauerstoff im zu messenden Gas sowie von Begleitgasen bestimmt werden.

Als Träger wird ein Plättchen aus Keramik vorgesehen, auf dem eine Schicht des Festelektrolyten aufgebracht ist, so daß nur wenig des kritisch zu handhabenden und teuren Materials für den Festelektrolyten, z.B. Y-dotierten ZrO₂ benötigt wird. Demgegenüber sind Keramikplättchen billige Massenware und weisen weiterhin sowohl die notwendige mechanische Stabilität als auch elektrisch isolierende Eigenschaften auf, um die elektrischen Leitungen von den Elektroden etc als Anschlußstück aufzunehmen. Es sind auf der einen Seite nicht nur eine, sondern mehrere Elektroden aufgebracht, die jeweils mit verschiedenen Bestandteilen in dem Gasgemisch wechselwirken. So können unter Verwendung jeweils eines einzigen Gehäuses, Plättchens, Temperaturfühlers und einer Widerstandsheizschicht verschiedene Bestandteile des Gasgemisches, z.B. CO, NO oder HC sowie O₂ gleichzeitig bestimmt werden. Ist hierbei der Sauerstoffgehalt konstant, so liegen die elektrischen Meßsignale zwischen einer als Referenz dienenden Elektrode und jeder der anderen Elektroden an. Wenn der Sauerstoffgehalt in dem zu überwachenden Gasgemisch hingegen schwankt, so sind zwei der möglichen elektrochemischen Halbzellen zum Messen des Sauerstoffes ausgelegt. Eine der Halbzellen ist dabei vorteilhafterweise als Feststoffreferenz (z.B. Palladium/Palladiumoxid) und die andere Halbzelle zur Bestimmung der tatsächlichen Sauerstoffkonzentration im Abgas ausgelegt.

Weitere zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: eine erste Ausführungsform, mit zwei Elektroden zur Bestimmung eines Bestandteils des Gases in Draufsicht;
- Figur 2: die erste Ausführungsform gemäß Fig. 1, in Druntersicht;
- Figur 3: eine zweite Ausführungsform der Erfindung, zur gleichzeitigen Bestimmung mehrerer Bestandteile des Gasgemisches in schematischer Draufsicht.
- Figur 4: eine dritte Ausführungsform der Erfindung, in schematischer Draufsicht, und
- Figur 5: einen Schnitt VI-VI gemäß Fig. 4.

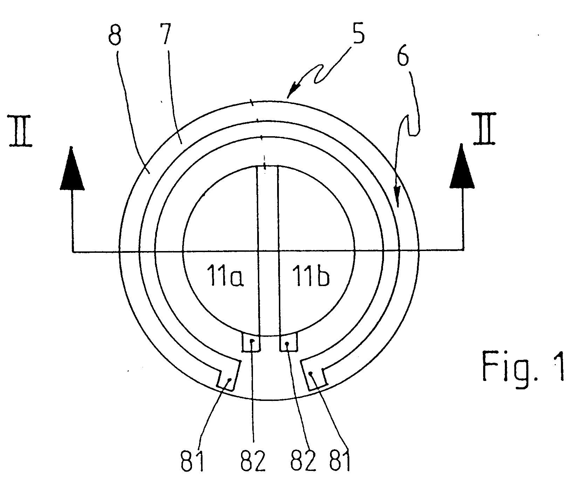

Die Vorrichtung 5 weist als Träger für die elektrochemische Zelle ein Plättchen 6 auf, auf dessen einer Seite 7 (Fig. 1) die Elektroden aufgebracht sind, und die nachfolgend noch näher erläutert wird. Ferner ist auf der einen Seite 7 ein die elektrochemischen Zellen umschließender, insgesamt etwa kreisringförmiger Temperaturfühler 8 vorgesehen, der auf der einen Seite 7 mit ihren Anschlußpunkten 81 ebenso wie elektrochemische Zelle mit Anschlußpunkten 82 versehen ist, an die - nicht gezeigte - Anschlüsse von elektrischen Leitungen angebracht und zu einer Auswerteanordnung geführt werden können.

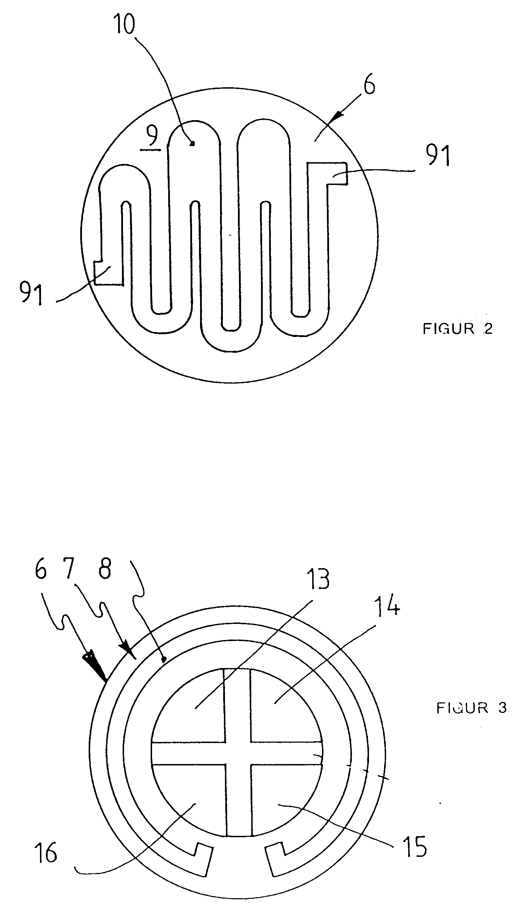

Auf der Rückseite 9 (Fig. 2) des Plättchens 6 ist eine Widerstandsheizschicht 10 vorgesehen, die in Draufsicht mäanderförmig aufgebracht ist und ebenfalls Anschlüsse 91 aufweist.

Auf dem dünnen, in Draufsicht kreisrunden Plättchen 6 sind auf der einen Seite 7 ferner zwei verschiedene metall- und/oder metalloxidhaltige Elektroden 11a, 11b in Form einer dünnen Schicht aufgebracht, die jeweils voneinander beabstandet angeordnet sind. Diese mittels Siebdrucktechnik und anschließendem Sintern hergestellte Vorrichtung in Planar- bzw. Dickschichttechnologie weist eine äußerst geringe Masse und kleine Einbaumaße auf und benötigt darüber hinaus nur noch ein einfaches Gehäuse als Halterung. Außerdem ist von Vorteil, daß direkt in unmittelbarer Nähe der Elektroden mittels des Temperaturfühlers die gemittelte effektive Temperatur abgenommen wird. Weiterhin ist das Heizelement auf der anderen Seite des Plättchens so angebracht,daß nur ein geringer Abstand zwischen der elektrischen Widerstandsheizschicht und den Elektroden besteht, wodurch eine kurze Ansprechzeit sichergestellt ist. Zum anderen muß nur eine geringe Masse in Form des Plättchens und der darauf angebrachten Einzelschichten geheizt werden, so daß zum Betrieb eine nur geringe Heizleistung notwendig ist.

Mit besonderem Vorteil können in zweckmäßiger Ausgestaltung bei der in Fig. 3 dargestellten zweiten Ausführungsform auf den Plättchen 6 bzw. dessen einer Seite 7 auf dem Träger 6 zwei oder mehr verschiedene Elektroden 13, 14 oder 15 angebracht sein, um gleichzeitig verschiedene Bestandteile in dem gasförmigen Gemisch zu messen. Hierbei dient dann eine Elektrode 16 als Referenzpotential, gegen die das Potential der anderen Elektroden 13, 14 und 15 gemessen werden.

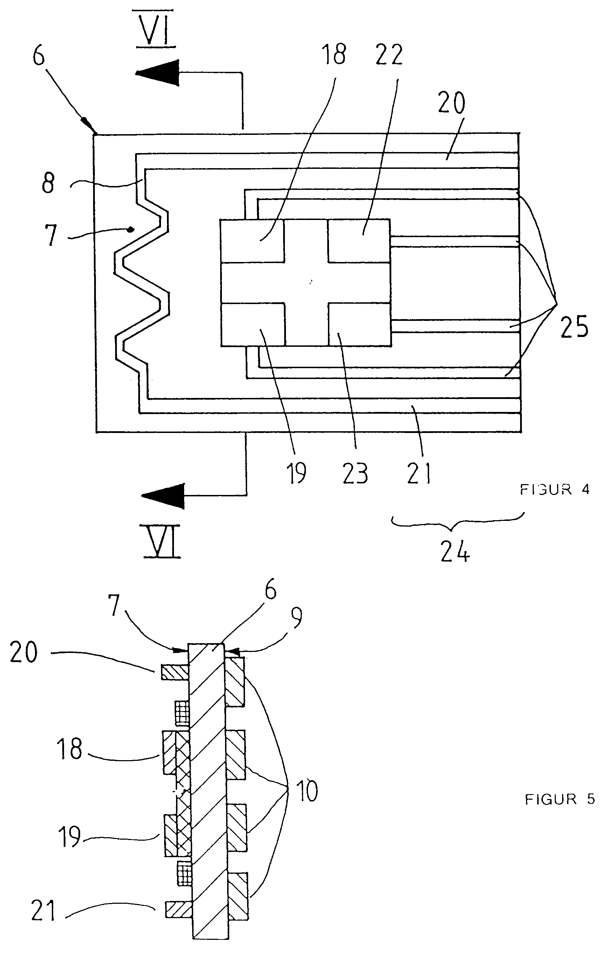

In Fig. 4 ist eine dritte Ausführungsform dargestellt. Bei dieser Ausführungsform wird ein Plättchen 6 aus Keramik, vorzugsweise Al₂O₃ verwendet, auf dem als dünne Schicht in Dickschichttechnik als Festelektrolyt 12 Yttrium stabilisiertes ZrO₂ aufgebracht ist. Ferner befindet sich auf der einen Seite 7 des Plättchens 6 ein Temperaturfühler 8 und auf der Rückseite (Fig. 6) ferner die elektrische Widerstandsheizschicht 10. Auf der dünnen Schicht des in Dickschichttechnologie aufgebrachten Festelektrolyten 12 sind ferner die Elektroden 18, 19, 22 und 23 aus Metall und/oder Metolloxid aufgebracht, die jeweils speziell mit anderen Bestandteilen im Gasgemisch wechselwirken, so daß auf deren Konzentration im zu messenden Gasgemisch bestimmt werden können.

Zum Abgriff der Potentiale der Elektroden 18, 19, 22, 23 und des Meßsignals des Temperaturfühlers 8, sowie zur Zuführung des Heizstromes zur Widerstandsheizschicht 10 sind auf dem Plättchen 6 über dem mit 24 bezeichneten Bereich (Anschlußstück) Metallschichten 20, 21, 25 als elektrische Zuleitungen aufgebracht. Das Anschlußstück 24 dient dazu, die Verbindung der Sonde mit Zuleitungskabeln in hinreichend großer Entfernung vom Meßort zu ermöglichen.

## Patentansprüche

1. Vorrichtung zur kontinuierlichen Überwachung der Konzentration von zumindest einem gasförmigen Bestandteil in Gasgemischen mit
a) zumindest zwei elektrochemischen Halbzellen mit einem Sauerstoffionen-leitenden Festelektrolyten,
b) einer nicht-ionenleitenden Keramikschicht auf dem Festelektrolyten, auf die vorzugsweise metall- und/oder metalloxidhaltige, mit den gasförmigen Bestandteilen wechselwirkende Elektroden mittels Siebdruck als dünne Schicht aufgebracht sind, wobei ein von der Konzentration der gasförmigen Bestandteile abhängiges elektrisches Meßsignal erzeugt wird,
c) einer Heizung,
d) elektrischen Leitungen zum Anschluß und zum Abgriff für die elektrischen Meßsignale, und mit zumindest zwei Elektroden als voneinander beabstandet angeordnete dünne Schichten auf einer Seite der Vorrichtung, wobei auf der gleichen Seite ferner ein von den Elektroden beabstandeter Temperaturfühler aufgebracht ist, und mit einer auf einer anderen Seite der Vorrichtung als Heizung vorgesehenen elektrischen Widerstandsheizschicht,
**dadurch gekennzeichnet,**
daß ein als Träger dienendes Plättchen (6) als Keramikscheibe aus der nicht-ionenleitenden Keramik ausgebildet ist und auf der einen Seite (7) sowohl den Temperaturfühler (8) als auch den Festelektrolyten (12) in Schichtform, auf dem die Elektroden (11a, 11b) aufgebracht sind, aufweist, wobei die Schichten des Temperaturfühlers (8) und des Festelektrolyten (12) mittels Siebdruck aufgebracht sind, und daß die elektrischen Meßsignale zwischen dem Temperaturfühler (8) oder der elektrischen Widerstandsheizung (10) einerseits und jeder der Elektroden (11a, 11b) andererseits für die Messung mehrerer gasförmiger Bestandteile des Gasgemisches anliegen.

2. Vorrichtung nach Anspruch 1, dadurch gekennzeichnet, daß das Plättchen (6) Aluminiumoxid (Al₂O₃) aufweist.

3. Vorrichtung nach mindestens einem der vorhergehenden Ansprüche, dadurch gekennzeichnet, daß der Temperaturfühler (8) am Rand des Phättchens (6) um die Elektroden (11a, 11b) herumgeführt ist.

4. Vorrichtung nach mindestens einem der vorhergehenden Ansprüche 1 und 3, dadurch gekennzeichnet, daß der Temperaturfühler mäanderförmig in der Mitte des Plättchens (6) zwischen den Elektroden (11a, 11b) angeordnet ist.

5. Vorrichtung nach Anspruch 1, dadurch gekennzeichnet, daß das Plättchen (6) aus Keramik mit einem Anschlußstück (24) für die elektrischen Leitungen (20, 21, 25) versehen ist.

6. Vorrichtung nach mindestens einem der vorstehenden Ansprüche, dadurch gekennzeichnet, daß der Festelektrolyt (12) stabilisiertes Zirkondioxid (ZrO₂) aufweist.

7. Vorrichtung nach einem der vorhergehenden Ansprüche, dadurch gekennzeichnet, daß die elektrische Widerstandsheizschicht (10) als mäanderförmige Bahn ausgebildet ist.

8. Vorrichtung nach einem der vorhergehenden Ansprüche, dadurch gekennzeichnet, daß alle Schichten, nämlich die der Elektroden (11a, 11b, 13-16, 18, 19, 22, 23), die dünne Schicht des Festelektrolyten (12), der Temperaturfühler (8) und die Widerstandsheizschicht (10) in Dickschichttechnologie auf dem Plättchen (6) aufgebracht sind.

## Claims

1. Device for the continuous monitoring of the concentration of at least one gaseous constituent in gas mixtures having
a) at least two electrochemical half cells with an oxygen-ionic conducting solid electrolyte,
b) a non-ionic conducting ceramic layer on top of the solid electrolyte and onto which preferably metallic and/or metal-oxide-containing electrodes interacting with the gaseous constituents are applied in the form of a thin layer by means of screen printing, wherein an electric measuring signal dependent on the concentration of the gaseous constituents is produced,
c) a heating device,
d) electric leads to connect and to tap off the electrical measuring signals and having at least two electrodes in the form of thin layers arranged at a distance from one another on one side of the device, wherein a temperature sensor at a distance from the electrodes is further applied on the same side and has an electrical resistance heating layer provided as a heating device on another side of the device,
characterized in that
a small plate (6) serving as support is constructed as a ceramic disk from the non-ionic conducting ceramic and has on one side (7) both the temperature sensor (8) as well as the solid electrolyte (12) in the form of a layer on which the electrodes (11a, 11b) are applied, wherein the layers of the temperature sensor (8) and of the solid electrolyte (12) are applied by means of screen printing, and that the electrical measuring signals appear between the temperature sensor (8) or the electrical resistance heating device (10) on the one hand and each of the electrodes (11a, 11b) on the other hand for the measurement of a plurality of gaseous constituents of the gas mixture.

2. Device according to Claim 1, characterised in that the small plate (6) possesses aluminium oxide (Al₂O₃).

3. Device according to at least one of the preceding claims, characterised in that the temperature sensor (8) at the edge of the small plate (6) is guided around the electrodes (11a, 11b).

4. Device according to at least one of the preceding Claims 1 and 3 characterised in that the temperature sensor is arranged in meandering manner in the centre of the small plate (6) between the electrodes (11a, 11b).

5. Device according to Claim 1, characterised in that the small plate (6) made of ceramic is provided with a connection piece (24) for the electric leads (20, 21, 25).

6. Device according to at least one of the preceding claims, characterised in that the solid electrolyte (12) possesses stabilised zirconium oxide (ZrO₂).

7. Device according to one of the preceding claims, characterised in that the electrical resistance heating layer (10) is constructed in the form of a meandering ribbon.

8. Device according to one of the preceding claims, characterised in that all the layers, that is to say that of the electrodes (11a, 11b, 13-16, 18, 19, 22, 23), the thin layer of the solid electrolyte (12), the temperature sensor (8) and the resistance heating layer (10) are applied on the small plate (6) in thick film technology.

## Revendications

1. Dispositif pour la surveillance continue de la concentration d'au moins un constituant gazeux dans des mélanges gazeux avec
a) au moins deux demies cellules électrochimiques avec un électrolyte solide conduisant les ions oxygène,
b) une couche céramique ne conduisant pas les ions sur l'électrolyte solide, sur laquelle sont appliquées en couche mince au moyen d'une sérigraphie des électrodes contenant de préférence un métal et/ou un oxyde métallique interagissant avec les constituants gazeux, un signal électrique de mesure dépendant de la concentration du constituant gazeux étant produit,
c) un dispositif de chauffage,
d) des lignes électriques pour le raccordement et pour la prise des signaux électriques de mesure, et avec au moins deux électrodes su couches minces disposées à distance l'une de l'autre sur un côté du dispositif, un capteur de température disposé à distance des électrodes étant en outre appliqué sur le même côté, et avec une couche de chauffage ohmique électrique prévue comme dispositif de chauffage sur un autre côté du dispositif,
caractérisé en ce que,
une plaquette servant de support (6) est formée comme une tranche de céramique constituée de la céramique ne conduisant pas les ions et présente sur un côté (7) le capteur de température (8) ainsi que l'électrolyte solide (12) dans une forme de couche, sur lequel sont appliquées les électrodes (11a, 11b), les couches du capteur de température (8) et de l'électrolyte solide (12) étant appliquées au moyen d'une sérigraphie, et en ce que les signaux électriques de mesure sont ajustés entre le capteur de température (8) ou le chauffage électrique ohmique (10) d'une part, et chacune des électrodes (11a, 11b) d'autre pan pour la mesure de plusieurs constituants gueux du mélange gazeux.

2. Dispositif selon la revendication 1, caractérisé en ce que la plaquette (6) présente de l'oxyde d'aluminium (Al₂O₃).

3. Dispositif selon au moins l'une quelconque des revendications précédentes, caractérisé en ce que le capteur de température (8) au bord de la plaquent (6) entoure les électrodes (11a, 11b).

4. Dispositif selon au moins l'une quelconque des revendications 1 et 3, caractérisé en ce que le capteur de température est disposé dans une forme sinueuse au milieu de la plaquette (6) entre les électrodes (11a, 11b).

5. Dispositif selon la revendication 1, caractérisé en ce que la plaquette (6) constituée de céramique est munie d'une pièce de raccordement (24) pour les lignes électriques (20, 21, 25).

6. Dispositif selon au moins l'une quelconque des revendications précédentes, caractérisé en ce que l'électrolyte solide (12) présente du dioxyde de zirconium stabilisé (ZrO₂).

7. Dispositif selon l'une quelconque des revendications précédentes, caractérisé en ce que la couche de chauffage électrique ohmique (10) est formée comme une voie de forme sinueuse

8. Dispositif selon l'une quelconque des revendications précédentes, caractérisé en ce toutes les couches, c'est-à-dire celles des électrodes (11a, 11b, 13-16, 18, 19, 22, 23), la couche mince de l'électrolyte solide (12), le capteur de température (8) et la couche de chauffage ohmique (10) sont appliqués sur la plaquette (6) par une technique en couche épaisse.
